**Europäisches Patentamt**

**European Patent Office**

**Office européen des brevets**

(11) Veröffentlichungsnummer: **0 025 511**
A2

# EUROPÄISCHE PATENTANMELDUNG

(21) Anmeldenummer: **80104759.8**

(22) Anmeldetag: **12.08.80**

(51) Int. Cl.³: **G 06 F 9/22,** G 06 F 9/30

(30) Priorität: **12.09.79 DE 2936801**

(43) Veröffentlichungstag der Anmeldung: **25.03.81**
**Patentblatt 81/12**

(84) Benannte Vertragsstaaten: **DE FR GB IT**

(71) Anmelder: **International Business Machines Corporation, Armonk, N.Y. 10504 (US)**

(72) Erfinder: **Bazlen, Dieter, Dr., Traubergstrasse 13, D-7000 Stuttgart 1 (DE)**
Erfinder: **Bock, Dietrich, Herdlauchring 5, D-7036 Schönaich (DE)**
Erfinder: **Getzlaff, Klaus J., Breitensteinersstrasse 5-6, D-7030 Böblingen (DE)**
Erfinder: **Hajdu, Johann, Bergamastrasse 77, D-7030 Böblingen (DE)**
Erfinder: **Painke, Helmut, Panoramastrasse 38, D-7030 Böblingen (DE)**

(74) Vertreter: **Jost, Ottokarl, Dipl.-Ing., Schönaicher Strasse 220, D-7030 Böblingen (DE)**

(54) **Steuereinrichtung zur Ausführung von Instruktionen.**

(57) In den Mikroinstruktionssätzen von elektronischen Datenverarbeitungsanlagen gibt es eine Reihe von Mikroinstruktionen, die hinsichtlich ihres Operationsablaufs gleich sind und sich nur in der Länge des Datenpfades, über den die zu einer Instruktionen gehörenden Daten übertragen werden, unterscheiden. So gibt es beispielsweise eine Reihe von Instruktionen, mit denen Daten aus einem Speicher abgerufen und zur Verarbeitung zu einer anderen Systemkomponente übertragen werden. Auf dem Weg zu der anderen Systemkomponente, beispielsweise einem Register oder einem Arbeitsspeicher, können die Daten gegebenenfalls auch noch über eine weitere Systemkomponente, die beispielsweise nur eine Dezimalumwandlung der Daten vornimmt, übertragen werden.

Auf die Datenfluß-Steuerlogik wirkt sich das so aus, daß ein Schreibimpuls, der zum Einschreiben dieser Daten in den Arbeitsspeicher benötigt wird, wegen der längeren Laufzeit über den längeren Datenpfad, erst eine Instruktionszykluszeit später erzeugt werden darf, um Informationsverlust zu vermeiden.

Wird nun ein in der Figur dargestellter Instruktionszykluszähler verwendet, dann kann die Struktur der Datenflußsteuerlogik für Instruktionen der eingangs erwähnten Art sowohl für kürzere als auch für längere Datenpfade den gleichen Aufbau haben. Eine Steuerlogik 51 bis 54 im Instruktionszykluszähler sorgt dafür, daß dieser Instruktionszykluszähler so viele Leerzyklen der Dauer jeweils einer Zykluszeit ausführt, als in Zykluszeiten gerechnet, der Datenpfad länger ist. Auf diese Weise wird erreicht, daß der Schreibimpuls für den Arbeitsspeicher stets zeitgerecht erzeugt wird.

- 1 -

## Steuereinrichtung zur Ausführung von Instruktionen

Die Erfindung betrifft eine Steuereinrichtung zur Ausführung von Instruktionen nach dem Oberbegriff des Anspruchs 1.

Steuereinrichtungen in elektronischen Datenverarbeitungsanlagen, welche die Ausführung von Instruktionen hinsichtlich der ihnen zugeordneten Daten steuern, unterscheiden die Instruktionen eines Instruktionssatzes, zu deren Ausführung die elektronische Datenverarbeitungsanlage fähig ist, im allgemeinen anhand der unterschiedlichen Operationscodes, die eine Instruktion in eindeutiger Weise kennzeichnen.

Bei Anwendung der horizontalen Programmierung (Mikroprogrammierung) dienen auch weitere Bits oder Bitfelder im Instruktionsformat, meist zur direkten Steuerung, d. h. ohne Decodierung, des Operationsablaufs bei der Ausführung einer Instruktion (vgl. "Rechnerstrukturen", Verlag R. Oldenbourg München, Wien, 1978; Kapitel "Steuerung").

Im Mikroinstruktionssatz einer Maschine gibt es eine ganze Reihe von Mikroinstruktionen, die im Prinzip gleich sind und sich nur in der Länge des Datenpfades über den die zu einer Instruktion gehörenden Daten übertragen werden, unterscheiden. So gibt es z. B. eine Reihe von FETCH-Instruktionen, d. h. Instruktionen mit denen Daten aus einem Speicher abgerufen und zur Verarbeitung zu einer anderen Systemkomponente übertragen werden. Auf dem Weg zu der anderen Systemkomponente, beispielsweise einem Register oder einem Arbeitsspeicher, können die Daten gegebenenfalls auch noch über

GE 979 011 E

- 2 -

eine weitere Systemskomponente zum Zwecke einer Zwischenverarbeitung geleitet und dann zu dem Bestimmungsort, dem Register oder Arbeitsspeicher übertragen werden.

Wenn Daten vom Hauptspeicher in den Arbeitsspeicher, längs eines längeren Datenpfades übertragen werden, der beispielsweise über eine Dezimalfunktion führt, die eine Überführung ungepackter Dezimalzahlen in gepackte vornimmt, dann wird für diese Zwischenverarbeitung ein zusätzlicher Zyklus benötigt. Handelt es sich bei der Übertragung von Daten aus dem Hauptspeicher in den Arbeitsspeicher aber um binäre Daten, die einer solchen Zwischenverarbeitung wie die dezimalen Daten nicht bedürfen, dann laufen die zu dieser Instruktion erforderlichen Daten auf einem kürzeren Datenpfad vom Datenursprung zum Datenbestimmungsort. Dieses ist der einzige Unterschied der beiden Mikroinstruktionen hinsichtlich ihrer Ausführung.

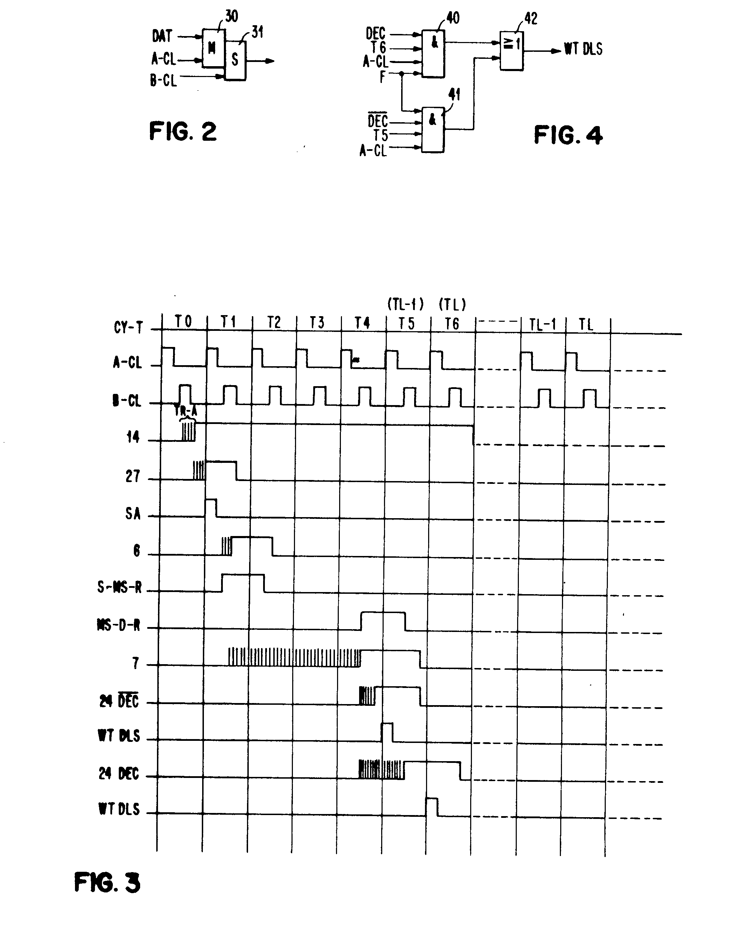

Strukturell hat dieser Unterschied in der Maschine zur Folge, daß, wie Fig. 4 zeigt, beispielsweise die Erzeugung des Schreibimpulses WT DLS für den Arbeitsspeicher, der den Zeitpunkt der Einspeicherung von Daten- oder Adresseninformation in den Arbeitsspeicher steuert, nur mit mehr als dem doppelten Schaltkreisaufwand möglich ist. Die Ursache hierfür liegt darin, daß neben dem UND-Tor 41, das den Zeitpunkt des Einschreibens, im gewählten Beispiel die Zykluszeit T5, für die auf dem kürzeren Datenpfad übertragenen Daten steuert, auch noch ein UND-Tor 40 vorhanden sein muß, das den Einschreibzeitpunkt zu einer Zykluszeit später, nämlich T6, für die auf dem längeren Weg übertragenen Dezimaldaten steuert, wobei beide Ausgänge auch noch über ein ODER-Tor 42 geführt werden müssen.

Diese Art der Operationssteuerung ist insbesondere bei Datenverarbeitungsanlagen der kleineren bis mittleren Leistungs-

GE 979 011 E

stufe aus Kostengründen und aus Gründen der Fehlersicherheit verbesserungswürdig.

Bekannte Schaltungsanordnungen, die zur Laufzeitanpassung von Daten und Zeitsteuersignalen deshalb notwendig sind, weil beispielsweise diese Signale über unterschiedlich lange Leitungen übertragen werden, liefern hier keinen Beitrag, da sie ständig wirksam sind und nicht solche Fälle zu unterscheiden vermögen, die eine Laufzeitanpassung durch ein zusätzliches Verzögerungsglied erfordern, von solchen Fällen, bei denen dieses nicht notwendig ist.

Auch die in der DE-AS 1 147 783 beschriebenen bekannten Lösungen zur Steuerung von Mikrobefehls- oder Mikrooperationsfolgen können das eingangs dargelegte Problem nicht lösen, da sie darauf gerichtet sind, die Folgen, die ein Mikroprogramm ausmachen, von Einrichtungen generieren zu lassen, die aus Sequenzketten gebildet sind, in denen jedes Glied einem Befehl zugeordnet ist.

Da die Mikroprogrammfolgen oft einander sehr ähnlich sind und sich nur in wenigen Befehlen unterscheiden, beziehen sich die Verbesserungen dieser bekannten Lösungen auf die Einsparung solcher Ketten dadurch, daß eine komplexere Kette gebildet wird, deren im Einzelfall nicht benötigten Glieder umgangen werden. Es wird auf diese Weise zwar die Zahl der Ketten verringert, nicht jedoch das Steuerwerk hinsichtlich der Komplexität seiner Datenflußsteuertore.

Es ist daher die Aufgabe der Erfindung, die Anzahl der Logikschaltungen im Steuerteil einer elektronischen Datenverarbeitungsanlage, welche die Steuersignale für beispielsweise die Datenflußsteuertore liefern, zu verringern.

Gelöst wird diese Aufgabe durch die im Hauptanspruch angegebenen Merkmale.

GE 979 011 E

Vorteilhafte Ausgestaltungen und Weiterbildungen des Gegenstandes der Erfindung sind den Unteransprüchen zu entnehmen.

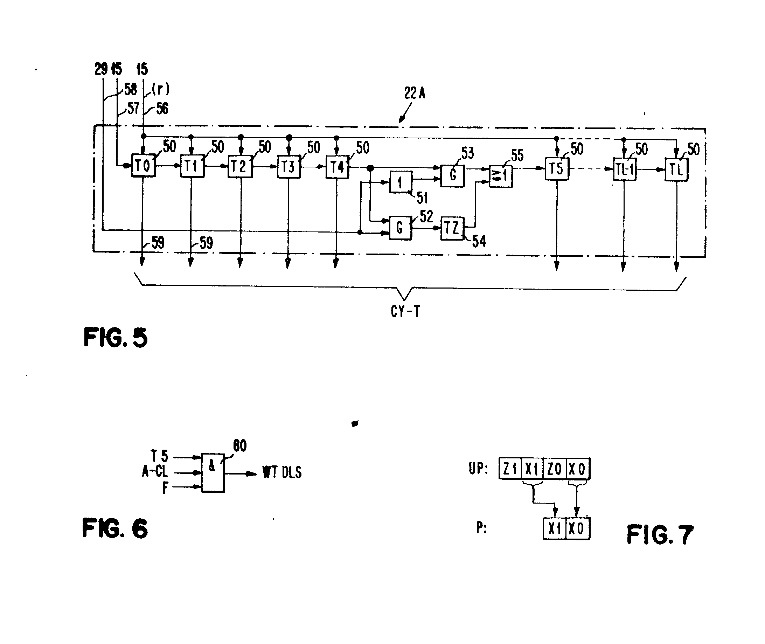

Durch die Erfindung wird somit der Vorteil erzielt, daß durch die Reduktion der Zahl der Datenfluß-Schaltkreise im Steuerteil dieser wirtschaftlicher und auch sicherer gegenüber Fehlern ist. Außerdem ist der Entwurf derartiger Steuerteile einfacher, da ihre Struktur weniger komplex ist, wie ein Vergleich der Figuren 4 und 6 zeigt.

Im folgenden wird ein Ausführungsbeispiel der Erfindung anhand der Figuren beschrieben.

Es zeigen:

Fig. 1    das Blockschaltbild einer elektronischen Datenverarbeitungsanlage,

Fig. 2      eine Prinzipdarstellung einer nach dem Master-
Slave-Prinzip aufgebauten bistabilen Kippstufe,

Fig. 3      ein Impulszeitdiagramm zur Darstellung der Abläufe
bei der Instruktionsausführung in einer Datenverarbeitungsanlage nach Fig. 1,

Fign. 4      Prinzipdarstellungen von Logikschaltungen zur Er-
und   6      zeugung von Datenflußsteuersignalen,

Fign. 5,     Blockschaltbilder von neuen, in einer Datenver-
8 und 9      arbeitunganlage gemäß Fig. 1 verwendbaren Instruktionszykluszählern und

Fig. 7      eine Prinzipdarstellung von Dezimalzahlen in ungepackter und gepackter Form.

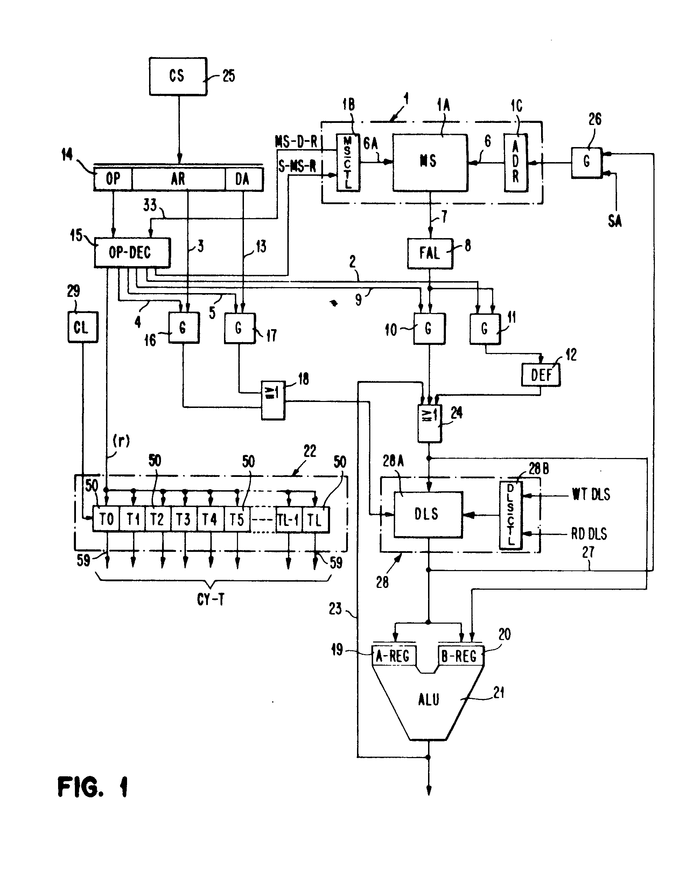

Fig. 1 zeigt einen Ausschnitt aus dem Steuerwerk eines elektronischen Digitalrechners sowie wesentliche Verbindungselemente des Steuerwerkes mit dem Hauptspeicher (HS) 1 der Anlage.

Makroinstruktionen, das sind Instruktionen des Benutzerprogramms, werden ausgeführt, indem sie in eine Folge von Mikroinstruktionen zerlegt werden, die sich im Steuerspeicher
(CS) 25 befinden.

Die Mikroinstruktionen einer Folge werden nacheinander in
ein Instruktionsregister 14 ausgelesen, das im vorliegenden
Fall drei Felder aufweist, eines für den Operationscode OP
und zwei, AR und DA, die Adressen für den Arbeitsspeicher (DLS) 28
enthalten.

Die Adresse im Feld AR kann die Adresse eines ersten und die
Adresse DA diejenige eines zweiten Operanden sein, wobei
letztere auch gleichzeitig die Adresse sein kann, an die

GE 979 011 E

das Resultat der Verknüpfung der beiden Operanden einer Mikroinstruktion in den Arbeitsspeicher zurückgeschrieben wird. Die Adressen werden über Leitungen 3 bzw. 13 und Torschaltungen 16 bzw. 17 und 18 an den Arbeitsspeicher 28 angelegt. Die Torschaltungen 16 und 17 werden dabei von Steuersignalen des Operationsdecodierers, die dieser nach der Decodierung des Operationscodes OP erzeugt und über die Leitungen 4 und 5 an die genannten Torschaltungen anlegt sowie von in dieser Figur nicht dargestellten Zeitsteuersignalen gesteuert. Diese Zeitsteuersignale sorgen dafür, daß beispielsweise zuerst die Adresse des ersten Operanden und dann die Adresse des zweiten Operanden zum Arbeitsspeicher 28 übertragen werden. Die beiden Operanden werden dann nacheinander, zunächst der A-Operand in das A-Register (A-REG) 19 und dann der B-Operand in das B-Register (B-REG) 20 aus dem Arbeitsspeicher 28 ausgelesen. Die beiden Opranden gelangen von da in die arithmetische und logische Einheit (ALU) 21, in der sie gemäß einer arithmetischen oder einer logischen Funktion miteinander verknüpft werden. Über die Ausgangsleitung 23 gelangt dann das Resultat der Verknüpfung über ein ODER-Tor 24 wieder in den Arbeitsspeicher 28, und zwar dort in die Speicherstelle, die durch die Adresse des B-Operanden gekennzeichnet ist.

Das Einschreiben und Auslesen von Information aus dem Arbeitsspeicher 28 geschieht, wie Fig. 1 zeigt, mit Hilfe einer Arbeitsspeicher-Steuerlogik (DLS-CL) 28b, die von den Steuersignalen RD DLS für das Lesen und WT DLS für das Schreiben gesteuert wird.

Im Arbeitsspeicher 28 sind auch Adressen gespeichert, die sich auf den Hauptspeicher beziehen. Diese Adressen werden über die Leitung 27 und die Torschaltung 26 zum Adressenregister (ADR) 1c des Hauptspeichers 1 übertragen. Dieser Hauptspeicher besteht aus der Speichermatrix (MS) 1a, dem

GE 979 011 E

bereits erwähnten Adressenregister 1c sowie der Hauptspeicher-Steuerlogik (MS-CL) 1b, auf die später noch näher eingegangen werden wird.

Die aus dem Hauptspeicher 1 ausgelesenen Daten gelangen über eine Speicherdatenausgangsleitung 7 zu einer Schaltungsanordnung (FAL) 8, in der eine gewünschte Byte-Strukturierung oder -Formatierung der Daten, die aus dem Hauptspeicher 1 hinsichtlich ihrer Wort- oder Halbwortgrenzen unstrukturiert ausgelesen werden, stattfinden.

Von der Schaltungsanordnung 8 zur Strukturierung der Daten gelangen diese zu zwei Torschaltungen 10 und 11, die über die Steuerleitungen 9 und 2 von Ausgangssignalen des Operationsdecodierers 15 gesteuert werden. Liegt auf der Leitung 9 ein Steuersignal zur Öffnung des Tores 10 vor, dann gelangen die Daten über das ODER-Tor 24 in den Arbeitsspeicher 28. Liegt dagegen ein Steuersignal auf der Leitung 2 vor, das die Torschaltung 11 durchschaltet, dann gelangen die Daten erst über eine Schaltungsanordnung 12, welche beispielsweise eine Dezimalfunktion (DEF) an diesen Daten durchführt, in den Arbeitsspeicher.

Die von der Schaltungsanordnung 12 auszuführendende Dezimalfunktion kann beispielsweise das dezimale Packen ungepackter Daten betreffen. Es sei hierzu auf Fig. 7 verwiesen, in der diese Dezimalfunktion schematisch erläutert ist. In dieser Figur ist in der obersten Zeile die ungepackte Form UP zweier Zahlen X0, Z0 und X1, Z1 dargestellt, wobei sie für diese Darstellung insgesamt zwei Bytes benötigen. Die erste Hälfte eines Bytes wird für den Numerus X und die zweite Hälfte des Bytes für den Zonenteil Z verwendet.

Bei der Umformung in die gepackte Form P, die in der untersten Zeile der Fig. 7 dargestellt ist, werden die beiden Zahlen zu einem Byte komprimiert, derart, daß die erste

GE 979 011 E

Hälfte der Numerus X0 und die zweite Hälfte den Numerus X1 der beiden Zahlen aufnimmt.

Nachdem diese Datenverdichtung in der Schaltungsanordnung 12 durchgeführt wurde, werden die Daten ebenfalls über das ODER-Tor 24 in den Arbeitsspeicher 28 übertragen. Die Umwandlungsoperation von der ungepackten in gepackte Form erfordert nur sehr wenig Zeit, nämlich weniger als eine Zykluszeit T.

Aus dem zuvor erläuterten Beispiel einer Instruktion, mit deren Hilfe Daten aus dem Hauptspeicher 1 entweder in ungepackter oder in gepackter Form in den Arbeitsspeicher 28 übertragen werden sollen, ist zu sehen, daß sich beide Arten von Mikroinstruktionen bei sonst gleichen Abläufen nur in der einen Zykluszeit unterscheiden, in der die Daten von einer ungepackten in eine gepackte Form umgewandelt werden.

Es liegt hier also das Problem vor, daß während der Ausführung von Mikroinstruktionen, die von einem Instruktionszykluszähler 22 gesteuert werden, es nötig sein kann, einen zusätzlichen Instruktionszyklus $T_i$ für an sich sonst identische Abläufe einzufügen ist. Ein solcher zusätzlicher Zyklus ist beispielsweise notwendig, wenn die aus dem Hauptspeicher 1 abgerufenen Daten über einen längeren Pfad zu ihrem Bestimmungsort, beispielsweise dem Arbeitsspeicher 28, übertragen werden müssen.

Wie Fig. 1 bereits zeigt, wird die Gesamtheit der Zykluszeiten CY-T einer Mikroinstruktion von einem Zykluszähler 22 erzeugt, der als ein eins aus n-Code Schieberegister ausgebildet ist. Beim sequentiellen Durchlaufen der einzelnen Stufen 50 erzeugt dieser Zykluszähler die den Zykluszeiten T0 bis TL (vgl. Fig. 3) entsprechenden Steuersignale. In jede Zykluszeit $T_i$ fallen zwei Impulse, und zwar ein Impuls des A-Taktes A-CL und ein mit diesem nicht überlappen-

GE 979 011 E

der Impuls des B-Taktes B-CL (vgl. Zeilen 1 bis 3 in Fig. 3).

Wie Fig. 3 weiter zeigt, kann das Abspeichern der Daten aus dem Hauptspeicher 1 in den Arbeitsspeicher 28 zur Zykluszeit T5 erfolgen, und zwar mit der Generierung des Schreibsignals WT DLS, das in der dritten Zeile von unten in Fig. 3 dargestellt ist. Der kurze Pfad besteht somit aus den Zykluszeiten TO, T1, T2, T3, T4 und T5.

Unter Einbeziehung der Dezimalfunktion DEF kann das Abspeichern der Daten aus dem Hauptspeicher 1 in den Arbeitsspeicher 28 erst zur Zykluszeit T6 erfolgen, und zwar mit der Erzeugung des Schreibimpulses WT DLS zu Beginn dieser Zykluszeit, wie die letzte Zeile in Fig. 3 zeigt. Der lange Pfad verläuft somit über die Zykluszeiten TO, T1, T2, T3, T4, T5 und T6.

Das wahlweise Einfügen einer zusätzlichen Stufe in die aus Flipflop-Stufen aufgebaute Schieberegisterkette, die den Zykluszähler bildet, bewirkt, daß für beide Mikroinstruktionen, die zuvor erläutert wurden, eine numerisch konstante Instruktionszykluslänge erzielt wird, so daß die Steuersignale, welche den Datenfluß der Anlage steuern, für beide Fälle in gleicher Weise erzeugt werden können. Hieraus ergibt sich, wie zuvor bereits erwähnt, der Vorteil der Erfindung.

Ein Instruktionszykluszähler, der für die Erzeugung der Steuersignale für die Ausführung der bis auf ihre Pfadlänge gleichen Mikroinstruktionen geeignet ist, ist in Fig. 5 dargestellt. Mit einem solchen Instruktionszykluszähler 22a kann der Operationsdecodierer 15 einfacher konstruiert sein, da er beispielsweise für die zwei Mikroinstruktionen der genannten Art immer nur die gleichen Steuersignale für den Datenfluß zu erzeugen braucht.

Dieser Zähler ist für das im Zusammenhang mit Fig. 1 erläuterte Ausführungsbeispiel modifiziert. Für andere Ausführungsbeispiele sind in der gleichen Weise bei Bedarf andere Modifizierungen ohne weiteres möglich.

Der in Fig. 5 dargestellte Instruktionszykluszähler 22a besteht aus einer Kette von Flipflop-Stufen 50, von denen jeweils immer nur einer leitend ist. Der leitende Flipflop erzeugt ein Ausgangssignal, das seiner Instruktionszykluszeit Ti zugeordnet ist. Zwischen dem Ende einer vorhergehenden und dem Anfang einer neuen Mikroinstruktion wird der Instruktionszykluszähler 22a durch ein Rückstellsignal r über die Leitung 56 vom Operationsdecodierer 15 zurückgestellt. Zu Beginn einer neuen Mikroinstruktion schaltet das Taktsignal des Taktgenerators 29 in Fig. 1, das über die Leitung 58 zur ersten Stufe 50, die für die Zykluszeit TO repräsentativ ist, übertragen wird, diese Stufe ein. Das zweite Taktsignal schaltet dann diese Stufe aus und die nachfolgende Stufe ein, welche die Zykluszeit T1 bestimmt. Jeder folgende Taktimpuls schaltet die vorhergehende Stufe aus und die nachfolgende ein, bis schließlich der letzte Taktimpuls die letzte Stufe einschaltet, welche die Zykluszeit TL erzeugt und die vorhergehende Stufe, welche die vorletzte Zykluszeit TL-1 erzeugte, abschaltet. Es handelt sich bei dem Instruktionszykluszähler 22a um einen solchen, der Instruktionen variabler Länge bedienen kann, d. h. wenn ein Instruktionszyklus nur sechs Instruktionszyklen benötigt, das sind beispielsweise die Zykluszeiten TO bis T5, dann erzeugt er in allgemeiner Form beschrieben und durch den Operationsdecodierer gesteuert, die Zykluszeiten TO, T1, T2, T3, TL-1 und TL.

Das besondere des Instruktionszykluszählers 22a besteht nun darin, daß er, der beispielsweise für die einfache Steuerung einer Mikroinstruktion ausgelegt ist, die Daten aus dem

GE 979 011 E

- 11 -

Hauptspeicher abruft und in den Arbeitsspeicher überträgt, wobei auch das Umwandeln der Daten von einer ungepackten in eine gepackte Form bei Bedarf mitgesteuert werden soll, noch eine zusätzliche und nur bei Bedarf einschaltbare Zusatz-Flipflop-Stufe 54 enthält, welche die Zusatzzykluszeit TZ erzeugt. Die Ausgangsleitungen 59 der jeweiligen Stufen sind zu den verschiedenen Toren des Datenflusses geführt, wo sie mit den Ausgangssignalen des Operationsdecodierers 15 kombiniert die zykluszeitgerechten Steueraktionen bei der Ausführung der jeweiligen Mikroinstruktion durchführen. Die Kombination der Steuersignale, d. h. der Ausgangsignale des Operationsdecodieres 15 mit den jeweiligen Zykluszeiten ist in Fig. 1 im einzelnen nicht dargestellt, sie geht jedoch aus Fig. 3 im Prinzip hervor.

Die Instruktionen, die einen kürzeren oder einen längeren Transportweg der Daten vom Entstehungsort zum Bestimmungsort kennzeichnen, unterscheiden sich entweder im Operationscode voneinander oder bei gleichem Operationscode durch ein Steuerbit im horizontalen Instruktionsformat. Wie auch immer diese Unterscheidung getroffen wird, so manifestiert sich diese durch ein Signal auf einer Steuerleitung 57, die entweder vom Operationsdecodierer 15 oder vom Instruktionsregister 14 zum Instruktionszykluszähler 22a verläuft.

Die Abwesenheit eines solchen Steuersignals auf der Leitung 57 kennzeichnet eine Instruktion, deren Daten auf einem kürzeren Weg transportiert werden. Eine solche Instruktion könnte z. B. heißen: "Rufe binäre Daten aus dem Hauptspeicher ab und übertrage sie in den Arbeitsspeicher". Bei einer solchen Instruktion laufen die Daten nicht über die Schaltungsanordnung 12 in Fig. 1 für die Dezimalfunktion. Der Datentransportweg ist somit um eine Zykluszeit kürzer. Ein fehlendes Steuersignal auf der Leitung 57 verhindert das Durchschalten des Tores 52, so daß dieses nicht das

GE 979 011 E

zusätzliches Glied 54 in die Kette von Flipflops zwischen dem Flipflop für die Zykluszeit T4 und dem Flipflop für die Zykluszeit T5 einschalten kann. Vielmehr wird über den Negator 51 die Torschaltung 53 durchgeschaltet, so daß das Weiterschaltesignal vom Flipflop für die Zykluszeit T4 über die Torschaltung 53 und das ODER-Tor 55 zu dem Flipflop für die Zykluszeit T5 gelangt.

Mikroinstruktionen, deren Daten einen längeren Weg vom Entstehungs- zum Bestimmungsort zurücklegen, wie das beispielsweise bei einer Instruktion der Fall ist, die heißen könnte: "Rufe Dezimaldaten ab, überführe sie in die gepackte Form und übertrage sie in den Arbeitsspeicher" erzeugen auf der Leitung 57 ein Steuersignal, so daß nun bei einer durchgeschalteten Torschaltung 52 der zusätzliche Flipflop 54 über das ODER-Tor 55 in die Flipflopkette zwischen dem Flipflop für die Zykluszeit T4 und dem Flipflop für die Zykluszeit T5 eingeschaltet werden kann. Der direkte Weg des Weiterschaltesignals wird über den Negator 51 und die nicht durchgeschaltete Torschaltung 53 blockiert. Auf diese Weise wird für den Datentransport auf dem längeren Pfad die zusätzliche Zykluszeit, die benötigt wird, um die dezimalen Daten in eine gepackte Form zu überführen, erzeugt.

Im folgenden werden die Abläufe bei der Ausführung der genannten Mikroinstruktionen "Rufe binäre Daten aus dem Hauptspeicher ab und übertrage sie in den Arbeitsspeicher" und "Rufe Dezimaldaten aus dem Hauptspeicher ab, überführe sie in die gepackte Form und übertrage sie in den Arbeitsspeicher", die zuvor schon allgemein erläutert wurden, noch einmal ausführlicher beschrieben.

Zuvor sei noch erwähnt, daß die Stufen und Flipflops, welche die Register in Fig. 1 bilden, nach dem Master-Slave-Prinzip, das in Fig. 2 dargestellt ist, aufgebaut sind.

BAD ORIGINAL

Diese Master-Slave-Flipflops bestehen aus einer ersten bistabilen Kippschaltung 30, die den Master-Teil (M) und einer zweiten bistabilen Kippstufe 31, die den Slave-Teil (S) bilden. Die erste bistabile Kippstufe 30 verfügt über zwei Eingänge, von denen an dem einen die Daten und am anderen der A-Takt A-CL anliegt. Die zweite bistabile Kippstufe 31 hat ebenfalls zwei Eingänge, von denen der eine mit dem Ausgang der ersten bistabilen Kippstufe 30 und der zweite mit dem B-Takt B-CL verbunden ist. Der Ausgang der zweiten bistabilen Kippstufe 31 ist der externe Ausgang des Master-Slave-Flipflop. Die in der ersten bistabilen Kippstufe 30 eines Master-Slave-Flipflops gespeicherte Information gelangt mit einem Impuls des B-Taktes B-CL zum Ausgang des Master-Slave-Flipflops.

Wie Fig. 3 nun weiter zeigt, beginnt mit dem Impuls des B-Taktes zur Zykluszeit TO am Ausgang des Instruktionsregisters 14 eine Signalübergangsaktivität, die mit TR-A bezeichnet ist und noch vor Ablauf der Zykluszeit TO zu stabilen Signalen führt, wie die vierte Zeile von oben in Fig. 3 zeigt. In der noch verbleibenden Zeit der Zykluszeit TO wird der Arbeitsspeicher 28 ausgelesen und die ausgelesene Information, eine Hauptspeicheradresse, auf der Leitung 27 bereitgestellt. Zu Beginn der Zykluszeit T1 ist das Signal auf der Leitung 27 bereits stabilisiert. Es kann somit der Torsteuerimpuls SA, synchronisiert mit einem Impuls des A-Taktes, zur Durchschaltung der Torschaltung 26 verwendet werden, so daß die Adresse von dieser Torschaltung in das Adressenregister 1c übertragen wird. Nach einer gewissen Signalübergangsaktivität steht somit die Hauptspeicheradresse ab Mitte der Zykluszeit T1 am Ausgang 6 des Adressenregisters 1c bereit (vgl. Zeile 7 in Fig. 3).

Aus dem Operationsdecodierer 15 wird über die Leitung 32 zur Zykluszeit T1 mit dem Beginn eines B-Taktimpulses ein Startsignal S-MS-R für die Ausführung einer Leseoperation

GE 979 011 E

- 14 -

an die Hauptspeicher-Steuerlogik 1b übertragen. Etwa mit Ende des Impulses des B-Taktes zur Zykluszeit T4 meldet die Hauptspeicher-Steuerlogik 1b über eine Leitung 33 dem Operationsdecodierer 15, daß der Hauptspeicher 1 die Daten für die Übertragung über die Speicherdatenausgangsleitung 7 bereit hat. Dieses Meldesignal ist mit MS-D-R bezeichnet und in Fig. 3 in der sechsten Zeile von unten dargestellt.

In der fünften Zeile von unten in Fig. 3 ist dargestellt, wie die Daten auf der Speicherdatenausgangsleitung 7 in Folge des Auslesevorganges aus der Speichermatrix 1a etwa für die Dauer dreier Zykluszeiten instabil sind, dann aber etwa ab Mitte der Zykluszeit T4 stabilisiert sind.

Die nun als gut zu betrachtenden Daten gelangen über die Schaltungsanordnung 8, in der sie maschinengerecht strukturiert werden, zu den beiden Torschaltungen 10 und 11. Es hängt nun von der durchzuführenden Mikroinstruktion ab, ob sie längs des kürzeren Pfades durch die Torschaltung 10 und das ODER-Tor 24 in den Arbeitsspeicher 28 übertragen werden sollen oder über den längeren Pfad über die Torschaltung 11, die Schaltungsanordnung 12 zur Durchführung einer Dezimalfunktion und dann über das ODER-Tor 24 in den Arbeitsspeicher 28.

Es sei zunächst angenommen, daß es sich um binäre, also nicht dezimale Daten handelt. Diese werden auf dem kürzeren Pfad in den Arbeitsspeicher 28 übertragen. Diese Daten stehen gegen Ende der Zykluszeit T4 am Ausgang des ODER-Tores 24 zum Einschreiben in den Arbeitsspeicher 28 bereit, wie die vierte Zeile von unten in Fig. 3 zeigt. Synchron mit einem Impuls des A-Taktes zur Zykluszeit T5 wird das Schreibsignal WT DLS erzeugt und zur Arbeitsspeicher-Steuerlogik 28b übertragen. Mit diesem Schreibimpuls gelangen die Daten vom Ausgang des ODER-Tores 24

GE 979 011 E

- 15 -

in die Speichermatrix 28a des Arbeitsspeichers. Sie werden an einer Speicherstelle eingeschrieben, die beispielsweise durch die Adresse bestimmt wird, die im Adressenfeld DA der im Instruktionsregister 14 befindlichen Mikroinstruktion enthalten ist. Diese Adresse wird über eine Torschaltung 17, gesteuert von einem Ausgangssignal des Operationsdecodierers 15 über die Leitung 5, kombiniert mit einem nicht dargestellten, einer bestimmten Zykluszeit Ti zugeordneten Zeitsteuersignal und über das ODER-Tor 18 zur Speichermatrix 28a des Arbeitsspeichers übertragen.

Handelt es sich bei der auszuführenden Instruktion um eine solche, die Daten längs des längeren Pfades zu transportieren hat, dann werden die am Ausgang der Schaltungsanordnung 8 strukturiert erscheinenden Dezimaldaten, die in ungepackter Form vorliegen, über die Torschaltung 11 zur Schaltungsanordnung 12 übertragen, welche die Dezimaldaten von ihrer ungepackten in ihre gepackte Form umsetzt. Durch diese zusätzliche Verarbeitungsstufe bedingt, stehen sie erst eine Zykluszeit später, d. h. erst ab Mitte der Zykluszeit T5 am Ausgang des ODER-Tores 24 zur Verfügung, wie auch aus der vorletzten Zeile in Fig. 3 zu sehen ist. Das Schreibsteuersignal WT DLS für den Arbeitsspeicher darf deshalb auch erst eine Zykluszeit später, d. h. zur Zykluszeit T6 erzeugt werden. Dieses ist in der letzten Zeile in Fig. 3 dargestellt.

Bei Verwendung eines Instruktionszykluszählers, bei dem mikroinstruktionsabhängig eine zusätzliche Stufe eingeschaltet werden kann, ergibt sich somit der Vorteil, daß von Seiten des Operationsdecodierers 15, der die mit den Zykluszeiten verknüpften Steuersignale für die Steuerung des Datenflusses erzeugt, für die Behandlung zweier unterschiedlich langer Mikroinstruktionen keine besonderen Vorkehrungen getroffen werden müssen. Wie das zuvor erläuterte Aus-

führungsbeispiel zeigt, gibt es nur Unterschiede im Zeitpunkt für die Erzeugung des Schreibsignals WT DLS für den Arbeitsspeicher 28.

Diese Unterschiede im Zeitpunkt für die Erzeugung des Schreibsignals WT DLS für den Arbeitsspeicher 28 können auch durch anders aufgebaute Instruktionszykluszähler erreicht werden. So ist beispielsweise ein als Impulszähler ausgebildeter Instruktionszykluszähler denkbar, bei dem für die Anpassung an die längere Datenlaufzeit längs des längeren Datenweges der reguläre Zählimpuls zu derjenigen Stufe unterdrückt wird, welche die Zykluszeit T5 erzeugt. Diese Stufe darf dann erst mit dem nächsten Impuls des Zähltaktes weitergeschaltet werden.

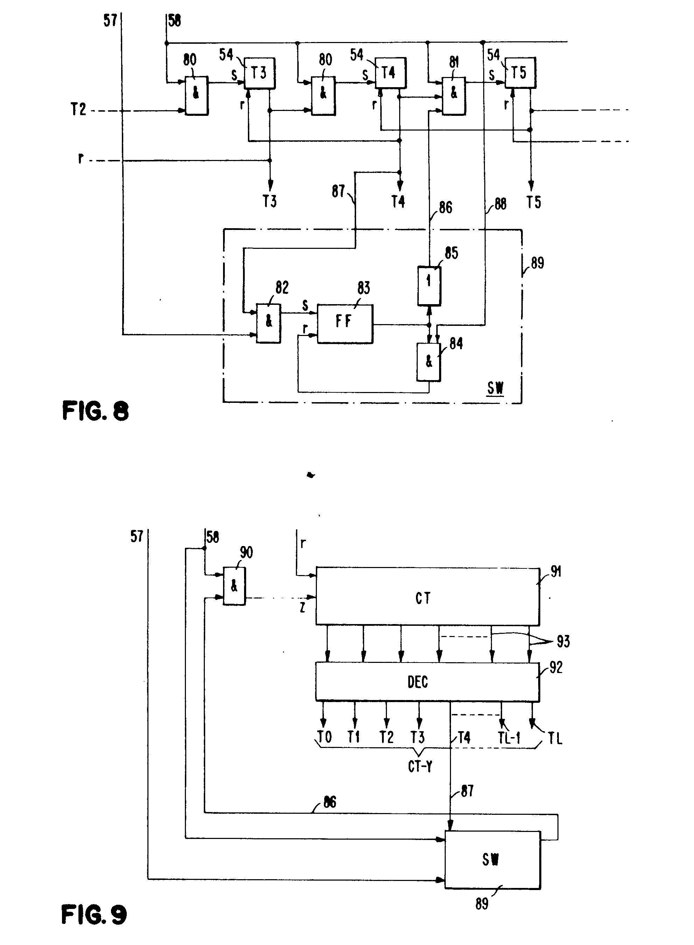

Fig. 8 zeigt den Teil des Instruktionszykluszählers, in dem zwischen den Stufen für die Zykluszeiten T4 und T5 eine Unterdrückungsschaltung für den Impuls des Zähltaktes eingefügt ist.

Der alternative Instruktionszykluszähler besteht ebenfalls wieder aus Flipflop-Stufen 54, welche die Zykluszeiten Ti erzeugen. Jede Stufe, beispielsweise die Stufe für die Erzeugung der Zykluszeit T3, wird von dem Ausgangssignal eines vorgeschalteten UND-Tores 80 gesteuert, das dann vorliegt, wenn über die Leitung 58 ein Impuls des Zähltaktes gleichzeitig mit dem Ausgangssignal der vorhergehenden Flipflop-Stufe vorliegt, die das der Zykluszeit T2 entsprechende Signal erzeugt.

Zur Unterdrückung eines Impulses des Zähltaktes für die Dauer einer Periode ist ein elektronischer Schalter (SW) 89 vorgesehen. Dieser Schalter besteht aus einem Flipflop 83, dessen Einstelleingang s ein UND-Tor 82 vorgeschaltet ist, das ein Einstellsignal für den Flipflop 83 liefert, wenn gleichzeitig ein Steuersignal aus dem Steuerwerk der Datenverar-

GE 979 011E

beitungsanlage auf der Leitung 57 soll das der Zykluszeit T4 entsprechende Zeitsteuersignal vorliegen. Das Ausgangssignal des nun eingestellten Flipflop 83 wird in einem Negator 85 invertiert und über die Leitung 86 zu einem UND-Tor 81 mit drei Eingängen übertragen. Das invertierte Ausgangssignal des Flipflops 83 sperrt somit das UND-Tor 81, so daß die an seinen beiden anderen Eingängen anliegenden Signale, nämlich das Taktsignal und das der Zykluszeit T4 entsprechende Zeitsteuersignal unterdrückt werden. Auf diese Weise kann der die Zykluszeit T5 erzeugende Flipflop 54 nicht eingestellt werden. Damit unterbleibt auch die Rückstellung des der Zykluszeit T4 zugeordneten Flipflops über die Verbindung der Ausgangsleitung des der Zykluszeit T5 zugeordneten Flipflops zum Rückstelleingang r des der Zykluszeit T4 entsprechenden Flipflops. Das Ausgangssignal auf der Leitung 87 bleibt somit am Eingang des UND-Tores 82 wirksam. Da aber das Ausgangssignal des eingestellten Flipflops 83, zusammen mit dem nächsten auf der Leitung 58 eintreffenden Taktimpuls über das UND-Tor 84 und den Rückstelleingang r, den Flipflop 83 wieder zurückstellt, wird das UND-Tor 81 von dem invertierten Ausgangssignal des rückgestellten Flipflops 83 durchgeschaltet, so daß der größte Teil des Taktimpulses noch bei vorliegendem Ausgangssignal des der Zykluszeit T4 zugeordneten Flipflops zu dem Einstelleingang s des der Zykluszeit T5 zugeordneten Flipflops gelangt und diesen einstellt. Das Ausgangssignal dieses Flipflops setzt nun über den Rückstelleingang r den vorhergehenden, der Zykluszeit T4 zugeordneten Flipflop zurück.

Auf diese Weise wird der Instruktionszykluszähler für die Dauer zweier Zykluszeiten auf der Zykluszeit T4 gehalten. Diese Zeit reicht aus, um die Daten über den längeren Pfad zu übertragen, so daß rechtzeitig mit der Zykluszeit T5 der Schreibimpuls WL DLS für den Arbeitsspeicher 28 erzeugt werden kann.

GE 979 011 E

- 18 -

Fig. 9 zeigt, wie der Schalter 89 zur Zählimpulsunterdrückung auch bei einem Instruktionszykluszähler verwendet werden kann, der aus einem reinen Impulszähler (CT) 91 und einem Decodierer (DEC) 92 besteht, der die Zählstellung des Zählers, manifestiert durch die vielfältigen Kombinationsmöglichkeiten der Ausgangssignale auf den Ausgangsleitungen 93, in die einzelnen Zykluszeiten TO bis TL decodiert.

Der Schalter 89 ist, das gleiche Beispiel zugrundegelegt, in gleicher Weise an den Instruktionszykluszähler angeschlossen, wie beim Ausführungsbeispiel nach Fig. 8. Die das Unterdrückungssignal liefernde Ausgangsleitung 86 ist hier lediglich an ein Eingangs-UND-Tor 90 angelegt, das die Impulse des Zähltaktes über die Leitung 58 an den Zähleingang z des Zählers 91 anlegt. Soll nun hier wieder, wie beim vorher erläuterten Ausführungsbeispiel, der Zähler für die Dauer zweier Zykluszeiten auf der Zykluszeit T4 stillgesetzt bleiben, dann wird, wenn der Zähler 91 die der Zykluszeit T4 entsprechende zeitliche Lage erreicht hat, der nächste Zählimpuls auf der Leitung 58 wegen des gesperrten UND-Tores 90 daran gehindert, zum Eingang z des Zählers 91 zu gelangen.

Da die Rückstellung des Schalters in der gleichen Weise vorgenommen wird, wie sie schon in Fig. 8 erläutert wurde, kann dann der übernächste Impuls des Zähltaktes den Zähler 91 weiterschalten, so daß dieser die Zykluszeit T5 zur gewünschten Zeitlage erzeugen kann.

Die Leistungsfähigkeit der neuen Instruktionszykluszähler zeigt ein Vergleich der beiden Fign. 4 und 6. In Fig. 4 ist derjenige Teil der Befehlsausführungssteuerung gezeigt, der in herkömmlicher Weise das Schreibsignal WT DLS erzeugt. Es sind hierfür zwei UND-Tore 40 und 41 sowie ein ODER-Tor 42 vorgesehen. Für die Ausführung der Mikroinstruktion "Rufe

- 19 -

Binärdaten vom Hauptspeicher ab und übertrage sie in den Arbeitsspeicher" ist das Steuersignal F erforderlich, welches für Mikroinstruktionen zuständig ist, die generell Daten vom Hauptspeicher abrufen und in den Arbeitsspeicher übertragen. Außerdem ist das Signal $\overline{DEC}$, das angibt, daß es sich um binäre Daten handelt, die keiner Behandlung durch eine dezimale Funktion DEF bedürfen sowie ein der Zykluszeit T5 zugeordnetes Signal und schließlich ein Impuls des A-Taktes erforderlich. Beim gleichzeitigen Anliegen dieser vier Eingangssignale des UND-Tores 41 wird dieses leitend und erzeugt über das ODER-Tor 42 das Schreibsignal WT DLS für den Arbeitsspeicher.

Liegt aber eine Mikroinstruktion "Rufe Dezimaldaten aus dem Hauptspeicher ab, überführe sie in die gepackte Form und übertrage sie in den Arbeitsspeicher" vor, dann wird wiederum das Funktionssignal F, ein Signal DEC, das angibt, daß eine Dezimalfunktion DEF ausgeführt werden soll sowie ein der Zykluszeit T6 zugeordnetes Signal sowie ein Taktimpuls des A-Taktes A-CL benötigt. Bei Koinzidenz dieser vier Eingangssignale am UND-Tor 40 wird dieses leitend und erzeugt über das ODER-Tor 42 das Schreibsignal WT DLS für den Arbeitsspeicher.

Bei Verwendung der neuen Instruktionszykluszähler wird dagegen für die Erzeugung des Schreibsignals WT DLS nur ein UND-Tor 60 benötigt, das nur drei Eingangssignale erfordert. Einmal das Signal F, das beide genannte Mikroinstruktionen kennzeichnet, ein Signal, das der Zykluszeit T5 zugeordnet ist und schließlich ein Impuls des A-Taktes A-CL. Die Koinzidenz dieser drei Signale macht das UND-Tor 60 leitend, womit das genannte Schreibsignal erzeugt wird.

GE 979 011 E

- 20 -

Das hier gezeigte Ausführungsbeispiel läßt sich systematisch auch auf andere, einander weitgehend ähnliche Mikroinstruktionen anwenden. Auf diese Weise wird der Steuerteil einer elektronischen Datenverarbeitungsanlage vereinfacht, was zu einer Kostenreduzierung, insbesondere bei Datenverarbeitungsanlagen der unteren Leistungsklasse und zu größerer Fehlersicherheit führt.

GE 979 011E

PATENTANSPRÜCHE

1. Steuereinrichtung zur Ausführung von Instruktionen in einer elektronischen Datenverarbeitungsanlage mit einem Instruktionsdecodierer, der aus dem Operationscodeteil einer Instruktion Steuersignale erzeugt, mit einem Instruktionszykluszähler, welcher einer der Länge der auszuführenden Instruktion entsprechende Anzahl von Zeitsteuersignalen erzeugt und mit Datenflußsteuertoren, denen die Steuersignale und die Zeitsteuersignale sowie die zu verarbeitenden Daten zugeführt werden,
dadurch gekennzeichnet,
daß für an sich gleiche Instruktionen, die sich nur durch die Länge des Datenpfades zwischen Datenursprung (z. B. Hauptspeicher 1) und Datenbestimmungsort (z. B. Arbeitsspeicher 28), der mittels der Instruktion zu verarbeitenden Daten unterscheiden, der die Ausführung der Instruktion steuernde Instruktionszykluszähler (22a) zur Anpassung an die längere Laufzeit der Daten über einen längeren Datenpfad eine der längeren Laufzeit entsprechende Anzahl von Zusatzimpulsstufen (54) enthält, die zusätzlich in die Kette aus Impulsstufen (50) an der Stelle zwischen zwei Impulsstufen (z. B. für die Zykluszeiten T4 und T5) eingefügt wird, die der Verzögerung längs des längeren Wegstückes (über 12) zugeordnet ist, wobei die Zusatzimpulsstufe(n) (54) keinen externen Ausgang aufweist (aufweisen), so daß Anordnung und Aufbau der Datenflußsteuertore (z. B. 60) für die an sich gleichen Instruktionen, die sich nur durch die Datenpfadlänge der ihnen zugeordneten Daten unterscheiden, ebenfalls gleich sind.

2. Steuereinrichtung nach Anspruch 1,
dadurch gekennzeichnet,
daß der Instruktionszykluszähler (22a), dessen Zeitsteu-

GE 979 011 E

BAD ORIGINAL

ersignale die Zykluszeiten (TO bis TL) erzeugen und die zusammen mit den Steuersignalen des Operationsdecodierers (3) die Datenflußsteuertore (z. B. 10, 11, 16, 17) zeitgerecht steuern, als eins aus n Code-Zähler strukturiert und aus zu einem Schieberegister geschalteten Flipflop-Stufen (55) aufgebaut ist, deren Ausgangsleitungen (59) zu entsprechenden Datenflußsteuertoren geführt sind, daß aber die Zustatzstufe(n) (54) keinen externen Ausgang aufweist (aufweisen).

3. Steuereinrichtung nach Anspruch 1 und/oder 2,
dadurch gekennzeichnet,
daß der Instruktionszykluszähler (22a) an der Einfügestelle des (der) Zusatzimpulsstufe(n) (54) einen elektronischen Umschalter (51 bis 53, 55) aufweist, der von einem Steuersignal des Operationsdecodierers, der auf der Basis des Operationscodes der jeweiligen Instruktion bei an sich gleichen Instruktionen die unterschiedliche Datenpfadlänge feststellt, gesteuert, nur bei einem längeren Datenpfad (z. B. von 1 über 12 nach 28) die Verbindung zwischen zwei regulären Impulsstufen (50) auftrennt und an dieser Trennstelle eine oder mehrere Zusatzimpulsstufe(n) (54) dazwischenschaltet.

4. Steuereinrichtung nach Anspruch 3,
dadurch gekennzeichnet,
daß das Signal zur Steuerung des Umschalters aus einem anderen Teil der Instruktion, als dem Operationscode abgeleitet ist.

5. Steuereinrichtung nach einem oder beiden der Ansprüche 1 und 4, dadurch gekennzeichnet,
daß die Anpassung des Instruktionszykluszählers an die längere Laufzeit der Daten über den längeren Pfad anstelle des Einschleifens einer oder mehrerer Zusatzstufen, die jeweils eine nicht nach außen wirksame Zy-

GE 979 011E

...auszeit erzeugen, ein von den Instruktionen steuerbarer Umschalter (89) vorgesehen ist, der einen oder mehrere Impulse des Taktsignals an der zeitlich äquivalenten Stelle der Zusatzstufe(n) unterdrückt.

6.  Steuereinrichtung nach Anspruch 5, dadurch gekennzeichnet,
    daß der Umschalter (89) die Sperrung der Übertragung des (der) Impulses (Impulse) des Taktsignals am Eingang des Instruktionszykluszählers vornimmt.

7.  Steuereinrichtung nach Anspruch 5, dadurch gekennzeichnet,
    daß der Umschalter (89) die Sperrung der Übertragung des (der) Impulses (Impulse) zwischen der (den) in Betracht kommenden Stufe(n) des Instruktionszykluszählers vornimmt.

GE 979 011 E

FIG. 1

FIG. 2

FIG. 4

FIG. 3

**FIG. 5**

**FIG. 6**

T 5 ——→ & ~60 ——→ WT DLS
A-CL ——→
F ——→

**FIG. 7**

UP: | Z1 | X1 | Z0 | X0 |

P: | X1 | X0 |

0025511

FIG. 8

FIG. 9